# EUROPÄISCHE PATENTSCHRIFT

(11) **EP 3 765 245 B1**
(45) Veröffentlichungstag und Bekanntmachung des Hinweises auf die Patenterteilung: **30.04.2025**
(21) Anmeldenummer: 19711532.2
(22) Anmeldetag: 11.03.2019
(51) Int. Cl.: B25J 9/14, B25J 19/00

(54) **ZUFÜHRVORRICHTUNG FÜR EINEN ZUMINDEST EIN GELENK AUFWEISENDEN MANIPULATORARM**
FEED APPARATUS FOR A MANIPULATOR ARM HAVING AT LEAST ONE JOINT
DISPOSITIF D'ALIMENTATION POUR UN BRAS MANIPULATEUR COMPRENANT AU MOINS UNE ARTICULATION

(30) Priorität: 14.03.2018 DE 102018002026
(43) Veröffentlichungstag der Anmeldung: 20.01.2021
(73) Patentinhaber: Mercedes-Benz Group AG, 70372 Stuttgart (DE)
(72) Erfinder: EHLEITER, Jürgen, 73614 Schorndorf (DE); GRAEWER, Marc-Andre, 73240 Wendlingen (DE)
(74) Vertreter: Novagraaf Group
(86) Internationale Anmeldenummer: PCT/EP2019/055942
(87) Internationale Veröffentlichungsnummer: WO 2019/175069

(56) Entgegenhaltungen:
- EP-A1- 2 431 140
- WO-A1-2020/156910
- DE-A1- 102008 011 383

## Beschreibung

Die Erfindung betrifft eine Zuführvorrichtung für einen zumindest ein Gelenk aufweisenden Manipulatorarm, insbesondere eines Industrieroboters, mit einem flexiblen Leitungspaket, über welches zumindest im Wesentlichen entlang des Manipulatorarms dessen Endeffektor wenigstens ein Prozessmittel zuführbar ist, und einem das Leitungspaket umschließenden, biegeschlaffen Führungsmantelelement.

Die deutsche Patentanmeldung DE 10 2008 011 383 A1. beschreibt eine solche Energiezuführungsvorrichtung für Industrieroboter, aufweisend ein Gehäuse, in dem ein Abschnitt einer Energiezuführungsleitung zum Längenausgleich geführt ist, ein Deckel, der zwischen einer ersten Position, in welcher der Deckel eine Zugangsöffnung zu dem im Gehäuse geführten Abschnitt der Energiezuführungsleitung freigibt, und einer zweiten Position, in welcher der Deckel die Zugangsöffnung überdeckt, durch Lagermittel bezüglich des Gehäuses verstellbar gelagert ist.

Die europäische Patentanmeldung EP 2 431 140 A1 beschreibt ein flexibles Werkzeug, welches ein Versteifungsmittel enthält, das im Gebrauch von einem ersten Zustand relativ geringer Steifheit in einen zweiten Zustand relativ hoher Steifheit umschaltbar ist und anschließend vom zweiten Zustand relativ hoher Steifheit auch zurück in den ersten Zustand gesteuert umschaltbar ist. Die Versteifung wird dadurch erreicht, dass entlang eines Führungsmantelelements als Rückgrad/ Backbone radial verlängerte Wandbeabstandungen angeordnet sind, die mehrere in Längsrichtung beabstandete kreisförmige Rippen tragen. In der Außenseite des Werkzeugs, das die Rippen und das Medium umschließt, befindet sich eine äußere Hülle oder Haut, die darin eingebettete Heizelemente enthält.

Die nachveröffentlichte WO 2020/156 910 A1 zeigt eine Führungseinrichtung zum Führen wenigstens einer Leitung und/oder wenigstens eines Mediums.

In modernen Produktionsanlagen, vor allem bei einer Serienfertigung, insbesondere von Kraftwagen, kommen Zuführvorrichtungen für in der Serienfertigung eingesetzte Industrieroboter zum Einsatz. Eine jeweilige Zuführvorrichtung ist für einen zumindest ein Gelenk aufweisenden Manipulatorarm, insbesondere eines Industrieroboters, vorgesehen und weist ein flexibles Leitungspaket auf, über welches zumindest im Wesentlichen entlang des Manipulatorarms dessen Endeffektor wenigstens ein Prozessmittel zuführbar ist. Ferner weist die Zuführvorrichtung ein das Leitungspaket umschließendes, biegeschlaffes Führungsmantelelement auf.

Das Leitungspaket ist flexibel, das heißt biegeschlaff bzw. biegbar, und dazu ausgebildet, mittels des Manipulatorarms verformt zu werden, sodass das Leitungspaket unter einem Verformen seiner selbst zumindest im Wesentlichen einer Bewegung des Manipulatorarms folgt. Das Leitungspaket weist wenigstens eine Leitung oder mehrere, in dem Leitungspaket zusammengefasste Leitungen auf. Eine jeweilige Leitung des Leitungspakets kann jeweils wenigstens ein elektrisches Leitelement, wenigstens ein Fluidleitelement und/oder ein sonstiges Rohr-, Kabel- und/oder Schlauchelement umfassen, sodass mittels des Leitungspakets dem Endeffektor das wenigstens eine Prozessmittel zuführbar ist und/oder das wenigstens eine Prozessmittel von dem Endeffektor abführbar ist.

Das flexible Leistungspaket verläuft zumindest im Wesentlichen entlang des Manipulatorarms, zum Beispiel zumindest im Wesentlichen parallel zu dem Manipulatorarm. Insbesondere kann das Leistungspaket von einer Basis des Industrieroboters bzw. Manipulatorarms bis zum Endeffektor, insbesondere von einer dritten Bewegungsachse bis zu einer sechsten Bewegungsachse des Manipulatorarms verlaufen, wobei der Endeffektor in einem Bereich der sechsten Bewegungsachse des Manipulatorarms bzw. des Industrieroboters angeordnet ist.

Als Endeffektor wird bei dem Industrieroboter ein letztes kinematisches Glied einer kinematischen Kette des Industrieroboters bezeichnet und kann beispielsweise als Greifeinheit, als Werkzeugeinheit (zum Beispiel Schweiß-, Niet-, Schraubeinheit etc.) und/oder als Sensoreinheit etc. ausgebildet sein.

Mittels des Leitungspakets ist dem Endeffektor wenigstens ein Prozessmittel zuführbar, bei welchem es sich insbesondere um Elektrizität, um wenigstens ein Fluid und/oder um wenigstens einen Gegenstand handeln kann. Gleichermaßen ist das wenigstens eine Prozessmittel mittelst des flexiblen Leitungspakets von dem Endeffektor abführbar. Hierzu kann die wenigstens eine Leitung des flexiblen Leitungspakets als ein elektrisches Leitelement (zu Beispiel Kabel, Draht etc.) ausgebildet sein, sodass mittels des Leitungspakets bzw. mittels der Zuführvorrichtung elektrische Sensorsignale, elektrische Schweißenergie, elektrische Betriebsenergie etc. entlang des Manipulatorarms transportierbar sind. Alternativ oder zusätzlich kann eine einzelne Leitung des Leitungspakets als ein Fluidleitelement ausgebildet sein, sodass Kühlmittel, Klebstoff, Schmierstoff, Wasser, Hydraulikfluide, Schutzgas etc. mittels der Zuführvorrichtung transportierbar sind. Genauso ist es heutzutage üblich, dass die wenigstens eine Leitung des Leitungspakets als ein sonstiges Rohr-, Kabel- und/oder Schlauchelement ausgebildet ist, sodass durch die Zuführvorrichtung beispielsweise Schrauben, Nieten, Schweißdraht, Werkstoff etc. hindurchleitbar und/oder hindurchführbar sind. Das biegeschlaffe Führungsmantelelement ist im gestreckten bzw. geraden Zustand ein Rohr- bzw. Schlauchelement, welches einen Innenraum ausbildet, in welchem das Leitungspaket angeordnet ist, sodass eine Längsmittenachse des Leitungspakets und eine Längsmittenachse des Führungsmantelelements zusammenfallen. Üblicherweise ist ein herkömmliches Führungsmantelelement aus einem Flexrohr bzw. Wellrohrschlauch aus Kunststoff ausgebildet. Mittels des Führungsmantelelements sind die einzelnen Leitungen des Leitungspakets im Innenraum des Führungsmantelelements zusammenzuhalten, um ein Einfädeln bzw. Einhaken von zum Manipulatorarm benachbarten Gegenständen zwischen die einzelnen Leitungen des Leitungspakets zu verhindern und infolgedessen die Zuführvorrichtung gegen Schäden zu schützen. An sich ist das Führungsmantelelement biegeschlaff bzw. biegbar ausgebildet, sodass das Führungsmantelelement in montiertem Zustand zumindest im Wesentlichen einer Form und/oder einem Verlauf des Leitungspakets folgt.

Derartige herkömmliche Zuführvorrichtungen sind aufgrund von Materialeigenschaften, insbesondere des Führungsmantelelements, in deren Flexibilität eingeschränkt, sodass Rückzugsysteme, welche beispielsweise als eine Federzug- und/oder Seilzugvorrichtung ausgebildet sein können, vorzusehen sind. Diese Rückzugsysteme sorgen dafür, dass das Leitungspaket bzw. das Führungsmantelelement einer mechanischen Grundspannung unterliegen, um eine bestmögliche Führung entlang des Manipulatorarms zu gewährleisten. Hierdurch soll verhindert werden, dass das Leistungspaket bzw. die Zuführvorrichtung an benachbarten Robotern oder sonstigen Gegenständen einhakt. Ferner verringern die Rückzugsysteme eine erforderliche Auszugslänge des Leitungspakets der Zuführvorrichtung, beispielsweise wenn die erforderliche Auszugslänge des Leitungspakets durch ein Bewegen des Manipulatorarms verringert wird.

Diese Rückzugsysteme sind besonders aufwendig und anfällig, sodass ein ungewollter, weil unproduktiver bzw. nicht wertschöpfender, Stillstand des Manipulatorarms häufig an einer Fehlfunktion bzw. an einem Defekt des Rückzugsystems liegt.

Um bei den herkömmlichen Zuführvorrichtungen ein Scheuern am Manipulatorarm beim Zurückziehen des Leitungspakets zu vermeiden, sind heutzutage des Weiteren Protektorelemente an der Zuführvorrichtung, insbesondere am Führungsmantelelement, vorzusehen. Diese schlagen beim Zurückziehen des Leitungspakets anstatt des Führungsmantelelements bzw. anstatt der Zuführvorrichtung an den Manipulatorarm an und sollen so einen besonders hohen Verschleiß des Führungsmantelelements und/oder eine Beschädigung des Manipulatorarms durch das Anschlagen des Leitungspakets verhindern. Hierbei entsteht aber ein besonders lauter Reib- und/oder Anschlaglärm.

Aufgrund der jeweiligen Massen der Rückzugsysteme und der Protektorelemente sind herkömmliche Zuführvorrichtungen besonders masseintensiv, weshalb eine Masse der Zuführvorrichtung bei einer Bahnplanung bzw. Prozessbahnplanung zu berücksichtigen ist. Denn die Zuführvorrichtung ist fest am Manipulatorarm bzw. fest am Industrieroboter montiert, sodass die Zuführvorrichtung bei einem durch den Manipulatorarm ausgeführten Prozess mittels des Manipulatorarms zu bewegen ist. Hieraus ergibt sich eine besonders aufwendige Bahnplanung bzw. Prozessplanung für den Manipulatorarm. Ebenfalls aufgrund der Massen der Rückzugsysteme bzw. der Protektorelemente ist ein Energiebedarf zum Betreiben des Manipulatorarms bzw. des Industrieroboters besonders hoch.

Durch die Biegeschlaffheit des Führungsmantelelements bzw. der Zuführvorrichtung kann es passieren, dass Anteile der Zuführvorrichtung, besonders bei ruckartigem Beschleunigen des Manipulatorarms, ungewollt an diesen anschlagen, was sich in einer besonders hohen Belastung für den Manipulatorarm bzw. für den Industrieroboter äußert. Hierdurch kann sich beispielsweise eine Lebensdauer des Manipulatorarms deutlich reduzieren. Das Anschlagen der Protektorelemente kann zu einer Beschädigung am Manipulatorarm führen, wodurch die Lebensdauer des Manipulatorarms ebenfalls weiter sinkt.

Aufgabe der vorliegenden Erfindung ist es, eine solche herkömmliche Zuführvorrichtung derart weiterzuentwickeln, dass ein damit ausgerüsteter Manipulatorarm besonders energieeffizient, aufwandsarm und langlebig betreibbar ist. Diese Aufgabe wird erfindungsgemäß durch eine Zuführvorrichtung mit den Merkmalen des Patentanspruchs 1 gelöst. Vorteile und vorteilhafte Ausgestaltungen mit zweckmäßigen Weiterbildungen der Erfindung sind in den übrigen Patentansprüchen angegeben.

Um eine Zuführvorrichtung der eingangs angegebenen Art derart weiterzuentwickeln, dass ein damit ausgerüsteter Manipulatorarm besonders energieeffizient, aufwandsarm und langlebig betreibbar ist, ist erfindungsgemäß eine Versteifungseinrichtung mit einer Haltevorrichtung vorgesehen, die positionsfest an dem biegeschlaffen Führungsmantelelement angeordnet ist. Ferner ist erfindungsgemäß wenigstens ein mittels der Haltevorrichtung gehaltenes Versteifungselement vorgesehen, welches in einem Aktivierungszustand der Versteifungseinrichtung mit einer Versteifungsenergie beaufschlagt ist, wodurch das biegeschlaffe Führungsmantelelement und infolgedessen das Leitungspaket mittels des Versteifungselements versteift sind, wobei die Haltevorrichtung wenigstens eine parallel zu dem Führungsmantelelement angeordnete Versteifungselementaufnahme aufweist, mittels welcher das wenigstens eine Versteifungselement an der Haltevorrichtung gehalten ist.

Mit anderen Worten weist die erfindungsgemäße Zuführvorrichtung die Versteifungseinrichtung auf, welche wiederum die Haltevorrichtung aufweist. Beispielsweise können die Haltevorrichtung und das Führungsmantelelement über eine Verklebung, Verschweißung etc. miteinander verbunden sein, sodass das mittels der Haltevorrichtung gehaltene bzw. halterbare Versteifungselement und das Führungsmantelelement zueinander unbewegbar sind.

Beispielsweise aufgrund eines Steuersignals, welches von einer Steuereinheit, insbesondere einer Steuereinheit des Manipulatorarms bzw. Industrieroboters, der Versteifungseinrichtung kabellos und/oder kabelgebunden bereitstellbar sein kann, kann die Versteifungseinrichtung in den Aktivierungszustand versetzbar sein. Auf analoge Weise kann die Versteifungseinrichtung in einen Deaktivierungszustand versetzbar sein, in welchem die Versteifungsenergie dem Versteifungselement nicht bereitgestellt ist oder die Versteifungsenergie zumindest teilweise von dem Versteifungselement abführbar ist.

Das Versteifungselement kann in einem Ruhezustand, zum Beispiel im Deaktivierungszustand der Versteifungseinrichtung, zumindest im Wesentlichen biegeschlaff sein oder in einer ersten, den Ruhezustand der Versteifungseinrichtung charakterisierenden Form angeordnet sein. Es ist beispielsweise denkbar, dass das Versteifungselement eine Formgedächtnislegierung aufweist bzw. zumindest teilweise aus der Formgedächtnislegierung hergestellt ist. Ein Bauteil aus einer Formgedächtnislegierung (FGL-Bauteil) weist bei einer Ausgangstemperatur eine Kalt-Form auf und ist durch ein Erwärmen auf eine Temperatur, welche höher ist als die Ausgangstemperatur, in eine von der Kalt-Form unterschiedliche Warm-Form reversibel umformbar. Das bedeutet, dass das beispielsweise mittels elektrischem Strom erwärmte FGL-Bauteil, welches die Warm-Form aufweist, durch ein Erkalten - zumindest im Wesentlichen auf die Ausgangstemperatur - (wieder) in die Kalt-Form umformbar ist.

Dementsprechend kann es sich bei der Versteifungsenergie beispielsweise um eine elektrische Energie bzw. Spannung, Wärme, Druck etc. handeln, welche im Aktivierungszustand der Versteifungseinrichtung dem Versteifungselement zugeführt bzw. bereitgestellt ist/wird. Beispielsweise aufgrund einer elektrischen Versteifungsenergie ist das die Formgedächtnislegierung umfassende Versteifungselement im Vergleich zum Ruhe- bzw. Deaktivierungszustand biegesteifer und/oder in einer den Aktivierungszustand charakterisierenden Form angeordnet bzw. anordenbar.

Genauer ist unter dem Versteifen zu verstehen, dass sich im versteiften Zustand bzw. Aktivierungszustand eine jeweilige Richtung einer tatsächlichen Längsmittenfaser (neutraler Faser) des Versteifungselements und einer gedachten Längsmittengerade mehr entsprechen als im Ruhe- bzw. Deaktivierungszustand. Mit anderen Worten verursacht im Aktivierungszustand die Versteifungsenergie am Versteifungselement ein Bestreben desselben, dessen Längsmittenfaser zumindest im Wesentlichen parallel zu der gedachten Längsmittengerade anzuordnen. Wieder anders ausgedrückt ist mittels der Versteifungseinrichtung über das Versteifungselement und über die Haltevorrichtung der das Leitungspaket haltenden Zuführvorrichtung eine Steifigkeit verleihbar, sodass im Aktivierungszustand - ohne Einsatz eines separaten Rückzugsystems - eine erforderliche Auszugslänge des Leitungspakets allein durch ein Bewegen des Manipulatorarms anpassbar ist.

Durch die erfindungsgemäße Zuführvorrichtung ist es im Gegensatz zu herkömmlichen Zuführvorrichtungen möglich, die Rückzugsysteme und die Protektorelemente entfallen zu lassen, wodurch die Zuführvorrichtung besonders masseeffizient auszubilden ist. Infolgedessen ist ein mit dieser Zuführvorrichtung ausgerüsteter Manipulatorarm bzw. Industrieroboter besonders energieeffizient betreibbar. Ein ungewolltes Einhaken der Zuführvorrichtung, insbesondere des Leitungspakets, an benachbarten Robotereinheiten bzw. Gegenständen ist ebenfalls durch die Zuführvorrichtung wirksam verhindert.

Ferner ist ein Einfluss der besonders masseeffizient ausgebildeten Zuführvorrichtung auf die Prozessbahn des Manipulatorarms besonders gering, sodass die Bahnplanung bzw. Prozessplanung besonders aufwandsarm erfolgen kann, da die entsprechenden Massen der Rückzugsysteme bzw. Protektorelemente bei der Bahnplanung nicht zu berücksichtigen sind.

Des Weiteren fällt eine Schlag- und/oder Scheuerwirkung der Zuführvorrichtung auf dem Manipulatorarm besonders gering aus; idealerweise entfällt diese Schlag- und/oder Scheuerwirkung komplett. Hierdurch ist der Manipulatorarm besonders lange betreibbar.

Überdies entfällt ein bei der herkömmlichen Zuführvorrichtung durch die Protektorelemente verursachter Anschlaglärm, wodurch der Manipulatorarm bzw. die erfindungsgemäße Zuführvorrichtung besonders lärmemissionsarm betreibbar sind.

Insgesamt resultiert aus der Zuführvorrichtung ein besonders geringer Kosteneinsatz beim Betrieb eines mit der Zuführvorrichtung ausgerüsteten Manipulatorarms bzw. Industrieroboters.

Die Versteifungseinrichtung der Zuführvorrichtung kann ein Anschlusselement aufweisen, über welches dem wenigstens einen Versteifungselement die Versteifungsenergie bereitstellbar ist. Besonders bevorzugt kann eine hierin nicht näher beschriebene, die Versteifungsenergie erzeugende und/oder bereitstellende Versorgungseinrichtung über das Anschlusselement reversibel und werkzeugfrei lösbar mit dem Versteifungselement versteifungsenergieleitend verbindbar sein.

Die Zuführvorrichtung ist besonders einfach zu warten bzw. zu reparieren, weil erfindungsgemäß die Haltevorrichtung wenigstens eine parallel zu dem Führungsmantelelement angeordnete Versteifungselementaufnahme aufweist, mittels welcher das wenigstens eine Versteifungselement an der Haltevorrichtung gehalten ist. Beispielsweise kann die Versteifungselementaufnahme als ein weiteres Schlauchelement ausgebildet sein, dessen Innenumfangsfläche einen Aufnahmeraum begrenzt, sodass in dem Aufnahmeraum das Versteifungselement anordenbar und darin halterbar ist. Insbesondere kann das als Schlauchelement ausgebildete Versteifungselement so in die Versteifungselementaufnahme einschiebbar sein, dass eine jeweilige Längsmittenachse der Versteifungselementaufnahme und des Versteifungselements zusammenfallen. Ist das Versteifungselement in die Versteifungselementaufnahme eingeschoben, ist das Versteifungselement parallel zu dem Führungsmantelelement und infolgedessen parallel zum Leitungspaket angeordnet und ortsfest in dieser Position gehalten.

Dies ist besonders vorteilhaft, da im Wartungs- und/oder Reparaturfall das wenigstens eine Versteifungselement besonders einfach aus der Versteifungselementaufnahme entnehmbar bzw. ein anderes, zum Beispiel neues Versteifungselement besonders einfach in die Versteifungselementaufnahme einsetzbar ist. Hierdurch ist eine Dauer, während welcher die Zuführvorrichtung und infolgedessen der Manipulatorarm aufgrund eines Defekts stillstehen, besonders kurz ausbildbar. Dementsprechend ist einem Gedanken an eine neue, besonders vorteilhafte Servicestrategie in besonderem Maße Rechnung getragen.

Es ist denkbar, dass das Schlauchelement und die Haltevorrichtung, insbesondere die Versteifungselementaufnahme, jeweils aus länglichen, ablängbaren Elementen (im Sprachgebrauch als "Meterware" bekannt) gebildet sind. Hierdurch lässt sich besonders aufwandsarm eine Vielzahl von jeweils unterschiedlichen Ausbildungen der Zuführvorrichtung herstellen. Denn eine Länge und/oder ein Durchmesser der Zuführvorrichtung, insbesondere des Leitungspakets bzw. der einzelnen Leitungen des Leitungspakets, sind besonders einfach über eine Auswahl der entsprechend ausgebildeten, ablängbaren Elemente anpassbar.

Besonders bevorzugt weist die Zuführvorrichtung eine Vielzahl von Versteifungselementen und eine Vielzahl von damit korrespondierenden Versteifungselementaufnahmen auf, sodass ein besonders zuverlässiges Versteifen des Leitungspakets erfolgt. Insbesondere kann eine Anzahl der in der Zuführvorrichtung zum Einsatz kommenden Versteifungselemente bzw. Versteifungselementaufnahmen von einem radialen Durchmesser des Leitungspakets bzw. von einem radialen Durchmesser des Führungsmantelelements abhängen. Beispielsweise können für einen besonders kleinen Durchmesser des Führungsmantelelements drei parallel zu dem Leitungspaket angeordnete Versteifungselemente ausreichen, während bei einem größeren Durchmesser des Führungsmantelelements vier, fünf, sechs, sieben usw. Versteifungselemente und entsprechend viele Versteifungselementaufnahmen eingesetzt sein können.

Es hat sich als besonders vorteilhaft herausgestellt, dass das wenigstens eine Versteifungselement als ein biegeschlaffes Schlauchelement ausgebildet ist, dessen Schlauchwand ein von einem Fluid durchströmbares Kanalelement begrenzt, welches im Aktivierungszustand vollständig mit dem Fluid befüllt ist, und das Versteifungselement mit der Versteifungsenergie beaufschlagt ist, indem das Fluid in dem Kanalelement mit einem Versteifungsdruck beaufschlagt ist. Insbesondere kann das Schlauchelement bzw. das Kanalelement an einem Ende fluidisch dicht sein, beispielsweise ein fluidisch dichtes Ende aufweisen, sodass das Schlauchelement und das fluidisch dichte Ende miteinander eine Druckkammer begrenzen. Insbesondere kann das Material des Schlauchelements Silikon umfassen, das heißt, das Schlauchelement kann zumindest teilweise aus Silikon hergestellt sein. Das so ausgebildete Silikonschlauchelement ermöglicht besonders kleine Biegeradien, ohne eine Funktion der Zuführvorrichtung zu beeinträchtigen bzw. einzuschränken. Hierdurch ist eine besonders zuverlässige Funktion bzw. ein besonders zuverlässiger Betrieb der Zuführvorrichtung bzw. des damit ausgerüsteten Manipulatorarms bzw. Industrieroboters gewährleistet. Des Weiteren ist das Silikonschlauchelement besonders widerstandsfähig gegen Knickbeschädigungen, sodass ein Risiko, die Zuführvorrichtung durch die besonders klein ausgebildeten Biegeradien oder durch Einquetschungen zu beschädigen, besonders gering ist.

Eine Innenumfangsfläche des Schlauchelements bzw. der Schlauchwand begrenzt das Kanalelement, welches hierdurch rohrartig bzw. schlauchartig ausgebildet ist. Das bedeutet, dass das Schlauchelement entlang dessen Längserstreckung zumindest im Aktivierungszustand einen zumindest im Wesentlichen kreisringförmigen Querschnitt aufweist. Dementsprechend kann das Schlauchelement als ein Kreisringszylinder ausgebildet sein. Dagegen kann das Schlauchelement im Deaktivierungszustand einen von einem Kreisringszylinder unterschiedlichen Querschnitt aufweisen, insbesondere biegeschlaff bzw. besonders biegbar sein.

Bei dem Fluid kann es sich um eine Flüssigkeit, zum Beispiel Öl, Wasser etc., und/oder Gas handeln. Dies ist besonders vorteilhaft, da in einer Industrie-, insbesondere Fertigungsanlage, zum Betreiben der Industrieanlagen, insbesondere des Manipulatorarms, derartige Prozessfluide ohnehin verfügbar sind. Ferner vorteilhaft ist hierbei, dass eine elektrische Energie zum Betreiben bzw. Versorgen des Versteifungselements entfallen kann, sodass hierdurch kein elektrisches Feld entsteht, welches einen unerwünschten Einfluss auf im Leitungspaket benachbarte Daten- und/oder Sensorsignalleitungen haben könnte.

Bevorzugt ist das Fluid als Luft ausgebildet, während die Versteifungsenergie als eine Energie ausgebildet ist, mittels welcher die Luft mit Druck beaufschlagbar ist. Mit anderen Worten erzeugt eine Druckerhöhung in der im Kanalelement angeordneten Luft ein Erhöhen der Versteifungsenergie, sodass bei einer Luftdruckerhöhung im Schlauchelement ein Versteifen und/oder ein weiteres Versteifen des Versteifungselements und infolgedessen des Leitungspakets erfolgt.

Luft als Prozessfluid ist in Industrieanlagen nicht nur besonders einfach verfügbar, sondern hat bei einer fehlerhaften Undichtigkeit der Versteifungseinrichtung lediglich einen besonders geringen, insbesondere überhaupt keinen andauernden, zum Beispiel schädigenden, Effekt auf benachbarte Anlagenteile, einen Boden der Fertigungsanlage etc. Überdies ist - im Gegensatz zu einer Flüssigkeit -, insbesondere bei einem Austausch des Versteifungselements, das Versteifungselement oder gar die gesamte Versteifungseinrichtung nicht von der Flüssigkeit zu befreien, zum Beispiel zu entleeren. Gleichermaßen kann bei einer Wiederinbetriebnahme ein Entlüften bzw. Befüllen des Versteifungselements bzw. der Versteifungseinrichtung mit dem Fluid entfallen.

Bei einem Einsatz von Luft, insbesondere Druckluft, im Versteifungselement ist dieses und infolgedessen die Versteifungseinrichtung pneumatisch steuer- und/oder regelbar.

Insbesondere kann aufgrund der pneumatischen Regelbarkeit die Versteifungsenergie stufenlos dem Versteifungselement bereitgestellt werden, sodass sich, insbesondere bedarfsgerecht, zum Beispiel in Abhängigkeit eines Bewegungsablaufs des Manipulatorarms, eine Vielzahl von jeweils unterschiedlichen Versteifungszuständen, zum Beispiel zwischen besonders steif und besonders biegeschlaff, ausbilden lässt. Aufgrund der Regelung ist statisch ein fest eingestellter Druck über die gesamte Prozesslaufzeit dem Versteifungselement bereitstellbar. Alternativ oder zusätzlich ist aufgrund der Regelung dynamisch eine Vielzahl von jeweils unterschiedlichen Drücken beispielsweise abhängig von einem jeweiligen Prozessschritt dem Versteifungselement bereitstellbar. Das pneumatische Steuern bzw. Regeln kann in ein Steuern des Manipulatorarms bzw. Industrieroboters integriert sein, sodass der Manipulatorarm und die Zuführvorrichtung miteinander gemeinsam, insbesondere über eine geneinsame Steuereinheit, steuerbar sind.

Die Haltevorrichtung und das Führungsmantelelement sind jeweils besonders einfach herstellbar, wenn die Haltevorrichtung und das Führungsmantelelement miteinander einstückig ausgebildet sind. Wie bereits beschrieben können das Führungsmantelelement und die Haltevorrichtung jeweils wenigstens ein Schlauchelement umfassen, wobei die beiden Schlauchelemente beispielsweise miteinander coextrudiert sein können. Hierdurch ist die positionelle Anordnung der Haltevorrichtung und des Führungsmantelelements aneinander besonders zuverlässig gewährleistet.

Es hat sich als weiter vorteilhaft gezeigt, wenn die Haltevorrichtung und das Führungsmantelelement jeweils zumindest teilweise aus einem Textilgebilde hergestellt sind. In anderen Worten kann ein Material der Haltevorrichtung und/oder ein Material des Führungsmantelelements jeweils ein Textilgebilde umfassen und/oder zumindest teilweise aus dem Textilgebilde hergestellt sein. Das Textilgebilde kann je nach Textilgebildeart ein Geflecht, ein Gewebe, ein Maschengebilde (zum Beispiel ein Gewirke) und/oder ein Vliesgebilde aufweisen.

Insbesondere sind die Haltevorrichtung und das Führungsmantelelement besonders einfach und/oder aufwandsarm miteinander einstückig herstellbar, indem aus einem textilen Flächengebilde das Führungsmantelelement und die Haltevorrichtung bzw. die Versteifungselementaufnahme abgenäht, abgesteppt etc. werden. Des Weiteren sind die textile Haltevorrichtung und das textile Führungsmantelelement jeweils besonders biegbar bzw. biegeschlaff ausgebildet, sodass sich die textile Haltevorrichtung und das textile Führungsmantelelement jeweils besonders innig an das Leitungspaket anschmiegen lassen. Ferner weist das Textilgebilde eine besonders dünne Materialstärke auf, sodass bei einem Einsatz der textilen Haltevorrichtung und des textilen Führungsmantelelements die Zuführvorrichtung besonders kompakt und/oder bauraumeffizient herstellbar ist.

Bei der Zuführvorrichtung kann vorgesehen sein, dass die Versteifungseinrichtung ein von dem Führungsmantelelement separat ausgebildetes, biegeschlaffes Schutzmantelelement aufweist, welches in einer Schutzstellung das Leitungspaket, die Haltevorrichtung, das Führungsmantelelement und das wenigstens eine Versteifungselement gemeinsam umschließt. Besonders bevorzugt kann das Schutzmantelelement zumindest teilweise aus einem Textilgebilde hergestellt sein. Das Schutzmantelelement bildet in der Schutzstellung einen rohr- und/oder schlauchartigen Schutzraum aus, durch welchen die in dem Schutzmantelelement angeordneten Elemente hindurch verlaufen, sodass das Schutzmantelelement die in dem Schutzraum angeordneten Elemente der Zuführvorrichtung gegen eine Umwelt der Zuführvorrichtung abgrenzt. Über das Schutzmantelelement kann die Zuführvorrichtung besonders widerstandsarm an einer Oberfläche des Manipulatorarms abgleiten, sodass ein Scheuern und infolgedessen eine Beschädigung des Manipulatorarms und/oder der Zuführvorrichtung besonders wirksam vermieden ist.

Ein weiterer Vorteil ist, dass das Schutzmantelelement im Zusammenwirken mit der darin angeordneten Haltevorrichtung eine besonders hohe Schutzwirkung für das Leitungspaket entfaltet, dadurch dass über die Haltevorrichtung von dem Leitungspaket beabstandete Schutzmantelelement eine Deformationszone erzeugt ist. Bei einer Kollision des Schutzmantelelements mit einem Gegenstand, insbesondere während eines Betriebs des Manipulatorarms bzw. Industrieroboters, erfolgt ein Aufprall dementsprechend an dem Schutzmantelelement, welches sich - für das Leitungspaket schadenfrei - in die Deformationszone hinein verformen kann, sodass das Leitungspaket vor einem direkten Aufprall besonders gut geschützt ist.

Des weiteren ist über eine Auslegung eines entsprechenden Textilgebildes (zum Beispiel Stoff-, Garn-, Faserart und/oder -material, Gebildeart sowie eine eventuelle Nachbehandlung des Textilgebildes, zum Beispiel ein Beschichten, ein Imprägnieren etc.) ist das Führungsmantelelement oder das Schutzmantelelement oder sind das Führungsmantelelement und das Schutzmantelelement an verschiedene Anforderungen, wie eine heiße, feuchte, trockene, kalte, chemikalienhaltige Umgebung etc., anpassbar. So ist die Zuführvorrichtung besonders flexibel einsetzbar und unter einem besonders geringen Aufwand an die verschiedenen Anforderungen anpassbar.

In einer Weiterbildung der Erfindung kann das Schutzmantelelement eine Verschlusseinheit aufweisen, welche reversibel und zerstörungsfrei zwischen einer Öffnungsstellung, in welcher das Schutzmantelelement entlang dessen Längserstreckungsrichtung geöffnet ist, und der Schutzstellung, in welcher das Schutzmantelelement entlang dessen Längserstreckungsrichtung geschlossen ist, verstellbar ist. Hierzu kann die Verschlusseinheit beispielsweise wenigstens einen besonders einfach und fehlerarm zu bedienenden Klettverschluss aufweisen, welcher besonders vorteilhaft an dem textil ausgebildeten Schutzmantelelement applizierbar, zum Beispiel während einer Herstellung des Schutzmantelelements mit einem Grundkörper des Schutzmantelelements vernähbar ist.

So kann bedarfsweise lediglich das einem Verschleiß unterliegende Schutzmantelelement besonders einfach bzw. aufwandsarm ausgetauscht werden, wenn dieses beschädigt und/oder verschlissen ist oder wenn die Zuführvorrichtung an eine geänderte Anforderung anzupassen ist. Hierdurch ist die Zuführvorrichtung besonders effizient betreibbar.

Des Weiteren ist ein Zeitaufwand, welcher zum Tausch, das heißt zur Demontage und zur Montage, des Schutzmantelelements aufzubringen ist, besonders gering, da das Schutzmantelelement in die Öffnungsstellung verstellbar ist, ohne hierzu ein Ende der Zuführvorrichtung, zum Beispiel vom Endeffektor, abzukoppeln. Eine Zeitersparnis bei der Montage bzw. Demontage des Schutzmantelelements führt zu besonders wenig unproduktivem Stillstand der Zuführvorrichtung und infolgedessen des Manipulatorarms bzw. Industrieroboters.

Um eine Bahn- und/oder Prozessbewegungsplanung des Manipulatorarms bzw. Industrieroboters besonders einfach und aufwandsarm zu gestalten, kann ein erstes Ende der Versteifungseinrichtung durch eine Anschlusseinheit gebildet sein, über welche die Versteifungseinrichtung fern dem Endeffektor an dem Manipulatorarm befestigbar oder befestigt ist. Das bedeutet, dass die Versteifungseinrichtung über die Anschlusseinheit beispielsweise in einem Bereich einer dritten Bewegungsachse oder in einem Bereich einer anderen Bewegungsachse des Manipulatorarms oder des Industrieroboters, zum Beispiel an dessen Basis bzw. erster Bewegungsachse befestigbar ist.

Insbesondere kann die Anschlusseinheit ein Kugelgelenk aufweisen, sodass eine Relativbewegung zwischen dem Ende der Versteifungseinrichtung und dem Manipulatorarm ermöglicht ist. Dies führt zu einer besonders vorteilhaft ausgeprägten Flexibilität bzw. Bewegbarkeit der Zuführvorrichtung in Bezug zu dem Manipulatorarm. Hierdurch kann gewährleistet werden, dass das erste Ende der Versteifungseinrichtung besonders flexibel einer Bewegung des Manipulatorarms folgen kann. Einem unvorteilhaften Verspannen der Zuführvorrichtung ist wirksam entgegengewirkt und Eigenbewegungen der Zuführvorrichtung, beispielsweise aufgrund von durch das Leitungspaket wandernden bzw. beförderten Gegenständen, werden nicht über eine starre Verbindung auf den Manipulatorarm übertragen. Dementsprechend ist der Manipulatorarm besonders präzise bewegbar bzw. steuerbar, was sich in einer besonders einfachen Bahnplanung niederschlägt.

Es kann vorgesehen sein, dass das Anschlusselement in die Anschlusseinheit integriert ist. Beispielweise kann es sich bei dem Anschlusselement um ein Gewindeloch handeln, in welches unter Vermittlung einer Gewindeverbindung eine Zuleitung der Versorgungseinrichtung einsetzbar, zum Beispiel einschraubbar ist. Das Gewindeloch kann in einem Grundkörper der Anschlusseinheit eingeformt, zum Beispiel gebohrt sein. Infolgedessen ist kein Bauraum für ein separat ausgebildetes Anschlusselement vorzusehen, über welches die Zuführvorrichtung mit der Versteifungsenergie versorgbar ist. Daher ist die Zuführvorrichtung besonders kompakt und/oder bauraumeffizient herzustellen.

Die Anschlusseinheit kann eine Verteilereinheit aufweisen, welche das wenigstens eine Versteifungselement mit dem Anschlusselement versteifungsenergieleitend verbindet. Insbesondere wenn mehrere Versteifungselemente bzw. mehrere Versteifungselementaufnahmen zum Einsatz kommen, ist den einzelnen Versteifungselementen über das eine, gemeinsame Anschlusselement die Versteifungsenergie bereitstellbar bzw. zuführbar.

In einer Weiterbildung kann die Versteifungseinrichtung eine reversibel und zerstörungsfrei lösbare Befestigungseinrichtung umfassen, mittels welcher die Anschlusseinheit und das Schutzmantelelement lösbar aneinander befestigbar sind, und ein erstes Befestigungselement der Befestigungseinrichtung an der Anschlusseinheit und ein mit dem ersten Befestigungselement korrespondierendes, zweites Befestigungselement der Befestigungseinrichtung an dem Schutzmantelelement angeordnet ist. So ist auf besonders vorteilhafte Weise sicherstellbar, dass das Schutzmantelelement positionsfest an der Anschlusseinheit gehalten ist und nicht, zum Beispiel entlang einer Längsmittenachse des Schutzmantelelements bzw. des Leitungspakets, verrutscht und dadurch die Schutzwirkung des Schutzmantelelements geringer wird als bei einem korrekt in Position gehaltenem Schutzmantelelement.

Die Befestigungseinrichtung kann beispielsweise einen weiteren Klettverschluss aufweisen, dessen erstes Klettverschlusselement, zum Beispiel ein Flauschband, besonders vorteilhaft an dem textil ausgebildeten Schutzmantelelement applizierbar, beispielsweise während einer Herstellung mit einem Grundkörper des Schutzmantelelements vernähbar ist. Ein zweites Klettverschlusselement, zum Beispiel ein Hakenband, ist dementsprechend an der Anschlusseinheit anzubringen, zum Beispiel damit zu verkleben.

Ein zweites Ende der Versteifungseinrichtung kann durch eine zweite Anschlusseinheit gebildet sein, über welche die Versteifungseinrichtung nahe dem Endeffektor an dem Manipulatorarm befestigbar ist. Hierdurch kann gewährleistet werden, dass das zweite Ende der Versteifungseinrichtung noch flexibler der Bewegung des Manipulatorarms folgen kann. Ferner ist dem unvorteilhaften Verspannen der Zuführvorrichtung noch weiter entgegengewirkt und die Eigenbewegungen der Zuführvorrichtung werden nicht über eine starre Verbindung auf den Manipulatorarm, insbesondere auf den Endeffektor übertragen. Daher sind mittels des mit der Zuführvorrichtung ausgerüsteten Manipulatorarms bzw. Industrieroboters besonders zuverlässig reproduzierbare Bahnen und/oder Prozessbewegungen des Manipulatorarms realisierbar.

Es ist besonders bevorzugt, wenn die erste Anschlusseinheit und die zweite Anschlusseinheit jeweils zumindest im Wesentlichen als Gleichteile bzw. baugleich ausgebildet sind. Hieraus folgt ein besonders effizientes und kostengünstiges Herstellen der Zuführvorrichtung, da die erste und die zweite Anschlusseinheit nach einem gemeinsamen Konstruktionsplan herstellbar sind. Ist das Anschlusselement in die Anschlusseinheit integriert, kann beim Herstellen der endeffektorseitigen Anschlusseinheit simplerweise das Einformen bzw. Bohren des Gewindelochs entfallen. Alternativ kann zum Abdichten des endeffektorseitigen Gewindelochs ein Verschlusselement vorgesehen werden, mittels welchem unter Vermittlung der Gewindeverbindung das Gewindeloch fluidisch dicht verschließbar ist.

Die Versteifungseinrichtung der Zuführvorrichtung kann eine Führungseinrichtung mit wenigstens einem Führungselement aufweisen, mittels welchem das Leitungspaket, die Haltevorrichtung, dass Führungsmantelelement und das wenigstens eine Versteifungselement gemeinsam an dem Manipulatorarm führbar sind. Das Führungselement kann ortsfest am Manipulatorarm befestigt, zum Beispiel damit verschraubt sein. Des Weiteren kann das Führungselement insbesondere kreisringzylindrisch ausgebildet sein, sodass sich das Leitungspaket, die Haltevorrichtung, dass Führungsmantelelement und/oder das wenigstens eine Versteifungselement durch das Führungselement hindurcherstrecken können. Hierbei können eine Längsmittenachse des Führungselements und eine gemeinsame Längsmittenachse des Leitungspakets, der Haltevorrichtung, des Führungsmantelelements und/oder des wenigstens einen Versteifungselements miteinander zusammenfallen. Eine Innenumfangsfläche des Führungselements kann dazu eingerichtet sein, zum Beispiel besonders glatt ausgebildet sein, dass die sich durch das Führungselement hindurcherstreckenden Elemente der Zuführvorrichtung daran besonders widerstandsarm entlanggleiten können.

Mit anderen Worten ermöglicht die Führungseinrichtung bzw. das Führungselement ein Bewegen, zum Beispiel Verschieben, der von dem Führungselement umschlossenen Elemente der Zuführvorrichtung entlang deren Längserstreckung. Dahingegen blockiert die Führungseinrichtung bzw. das Führungselement ein Ausweichen der von dem Führungselement umschlossenen Elemente der Zuführvorrichtung, zum Beispiel entlang einer radialen Richtung der Zuführvorrichtung.

Darüber hinaus kann mittels der Führungseinrichtung das in der Schutzstellung angeordnete Schutzmantelelement an dem Manipulatorarm führbar sein, wobei das Schutzmantelelement besonders vorteilhaft eine mit der Innenumfangsfläche des Führungselements korrespondierende Gleitfläche der Zuführvorrichtung bildet, sodass die von dem Schutzmantelelement umschlossenen Elemente der Zuführvorrichtung über das Schutzmantelelement noch widerstandsärmer an der Innenumfangsfläche des Führungselements entlanggleiten können.

Um den Gedanken an die neue vorteilhafte Servicestrategie noch weiter zu berücksichtigen, kann die Versteifungseinrichtung eine Sensoreinrichtung mit wenigstens einem Sensorelement aufweisen, über welche eine Auswerteeinheit wenigstens ein einen Zustand der Versteifungseinrichtung charakterisierende Sensorsignal bereitstellbar ist. Das wenigstens eine Sensorelement kann insbesondere jeweils wenigstens einen Drucksensor, Temperatursensor, Dehnmessstreifen, elektrischen Widerstand, optischen Sensor, kapazitiven Sensor etc. aufweisen. Hierbei ist insbesondere denkbar, dass das Sensorelement in ein Material der Zuführvorrichtung integriert ist. Wenn das Schutzmantelelement aus dem Textilgebilde hergestellt ist oder das Textilgebilde umfasst, kann das Sensorelement einen in das Textilgebilde eingearbeiteten Sensor umfassen. Hierbei kann unter anderem eine in das Textilgebilde eingewebte Sensorfaser, ein besonders flach ausgebildeter, eventuell zwischen zwei Textillagen des Textilgebildes angeordneter Sensor etc. infrage kommen. Mit anderen Worten kann es sich bei dem Textilgebilde, aus welchem das Schutzmantelelement zumindest teilweise herstellbar ist, um eine sogenannte "Smart-Textilie" handeln.

Über das wenigstens eine Sensorelement der Sensoreinrichtung kann insbesondere eine Temperatur, ein Druck, ein Abnutzungsgrad etc. der Zuführvorrichtung erfasst werden. Von besonderem Interesse ist ein Erfassen des Abnutzungsgrads von Elementen der Zuführvorrichtung die einem besonders hohen Verschleiß unterliegen, insbesondere des Schutzmantelelements. Das diesen jeweiligen Zustand der Versteifungseinrichtung charakterisierende Sensorsignal kann kabellos, zum Beispiel per WLAN (wireless local area network: kabelloses lokales Netzwerk), Bluetooth (Datenübertragung per Funktechnik), NFC (near field communication: Nahbereichskommunikation per elektromagnetischer Induktion) etc., und/oder kabelgebunden der Sensoreinrichtung bereitstellbar, zum Beispiel übermittelbar sein.

Hierdurch ist einem Gedanken an die "Industrie 4.0" in besonderem Maße Rechnung getragen. Einem Nutzer des Manipulatorarms bzw. Industrieroboters lassen sich so auf besonders einfache Art und Weise Daten und/oder Parameter der Zuführvorrichtung bereitstellen. Mit anderen Worten ist eine Prozessdatenüberwachung durch den Nutzer besonders aufwandsarm zu gewährleisten. Besonders vorteilhaft ist, dass hierdurch dem Nutzer Verschleißerscheinungen, drohende Fehlfunktionen und/oder Defekte bereitgestellt, zum Beispiel angezeigt werden können. Dies ermöglicht eine besonders zeitnahe Ersatzteilbestellung, insbesondere noch bevor der Manipulatorarm bzw. die Zuführvorrichtung aufgrund der Fehlfunktion oder des Defekts stillsteht. Hierdurch ergibt sich in weiterer Konsequenz eine besonders kurze Reparaturdauer.

Ein Konstruktionsplan der Versteifungseinrichtung, insbesondere der Anschlusseinheit bzw. Anschlusseinheiten, kann derart ausgebildet sein, dass eine herzustellende Versteifungseinrichtung in Abhängigkeit von einer Größe und/oder Gewichtsklasse des mit der Versteifungseinrichtung auszurüstenden Roboters bzw. Manipulatorarms herstellbar ist. Die Versteifungseinrichtung kann modular ausgebildet sein, sodass zum Beispiel je nach Gewichtsklasse verschieden viele Versteifungselemente eingesetzt werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt
- Fig. 1: eine schematische Draufsicht einer Zuführvorrichtung für einen Manipulatorarm;
- Fig. 2: eine schematische Seitenansicht der Zuführvorrichtung für den Manipulatorarm;
- Fig. 3: eine schematische und perspektivische Ansicht einer Haltevorrichtung und eines Versteifungselements;
- Fig. 4: eine schematische Ansicht des Versteifungselements;
- Fig. 5: eine schematische Ansicht des Versteifungselements in einem Aktivierungszustand;
- Fig. 6: eine schematische und perspektivische Ansicht eines Schutzmantelelements;
- Fig. 7: eine schematische und perspektivische Ansicht einer zusammengesetzten Anschlusseinheit;
- Fig. 8: einzelne Elemente der Anschlusseinheit, welche teilweise in einer perspektivischen Ansicht und in einer Schnittansicht dargestellt sind;
- Fig. 9: eine perspektivische Ansicht eines mit der Zuführvorrichtung ausgerüsteten Industrieroboters.

In den Figuren sind gleiche oder funktionsgleiche Elemente mit gleichen Bezugszeichen versehen.

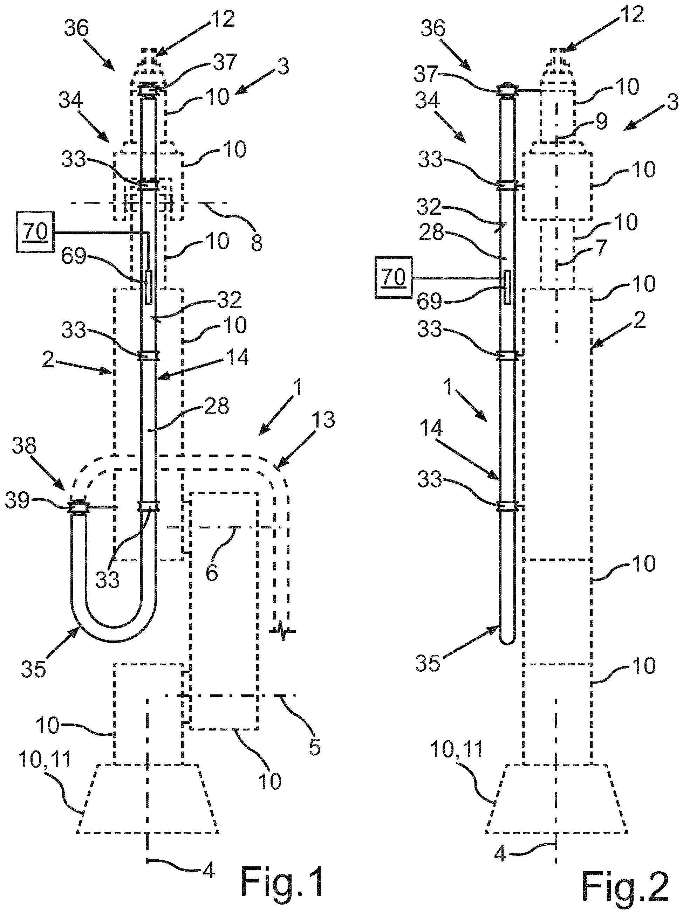

Fig. 1 zeigt in einer schematischen Draufsicht und Fig. 2 in einer schematischen Seitenansicht eine Zuführvorrichtung 1 für einen Manipulatorarm 2. Der Manipulatorarm 2 ist Teil eines Industrieroboters 3, welcher üblicherweise sechs Bewegungsachsen 4 bis 9 aufweist. Die Bewegungsachsen 4 bis 9 sind jeweils durch ein jeweiliges Drehgelenk definiert, welches jeweils zwei direkt zueinander benachbarte Glieder 10 des Industrieroboters 3 bzw. des Manipulatorarms 2 drehbar miteinander verbindet. An einem von einer Basis 11 des Industrieroboters 3 am weitesten entfernten Glied 10 ist ein Endeffektor 12 angeordnet, welcher als Greifeinheit, Verbindungseinheit, insbesondere Schweißeinheit, Nieteinheit, Schraubeinheit etc., ausgebildet sein kann. Um dem Endeffektor 12 wenigstens ein Prozessmittel zuzuführen oder von dem Endeffektor ein Prozessmittel abzuführen, umfasst die Zuführvorrichtung 1 ein Leitungspaket 13, welches flexibel bzw. biegbar ausgebildet ist, sodass das flexible Leitungspaket 13 an eine jeweilige Stellung des Industrieroboters 3 bzw. der Glieder 10 des Industrieroboters 3 bzw. des Manipulatorarms 2 anpassbar ist. Bei dem Prozessmittel kann es sich beispielsweise um elektrische Betriebsenergie, ein Kühlmittel, Werkstoff, Klebstoff, Schmierstoff, Schrauben, Nieten und/oder Schweißdraht etc. handeln, welches über das Leitungspaket 13 dem Endeffektor 12 zuführbar ist. Hierzu ist in dem Leitungspaket 13 wenigstens eine Leitung oder sind in dem Leitungspaket 13 mehrere Leitungen zusammengefasst, durch welche das/die Prozessmittel hindurchführbar ist/sind.

Um den mit der Zuführvorrichtung 1 ausgerüsteten Manipulatorarm 2 besonders energieeffizient, aufwandsarm und langlebig betreibbar auszubilden, ist eine Versteifungseinrichtung 14 vorgesehen, mittels welcher das Leitungspaket 13 bedarfsgerecht versteifbar ist. Die Versteifungseinrichtung 14 ist so ausgebildet, dass diese an einer ohnehin vorhandenen, herkömmlichen Zuführvorrichtung applizierbar, zum Beispiel nachrüstbar ist. Die Versteifungseinrichtung 14 wird im Folgenden detailliert beschrieben.

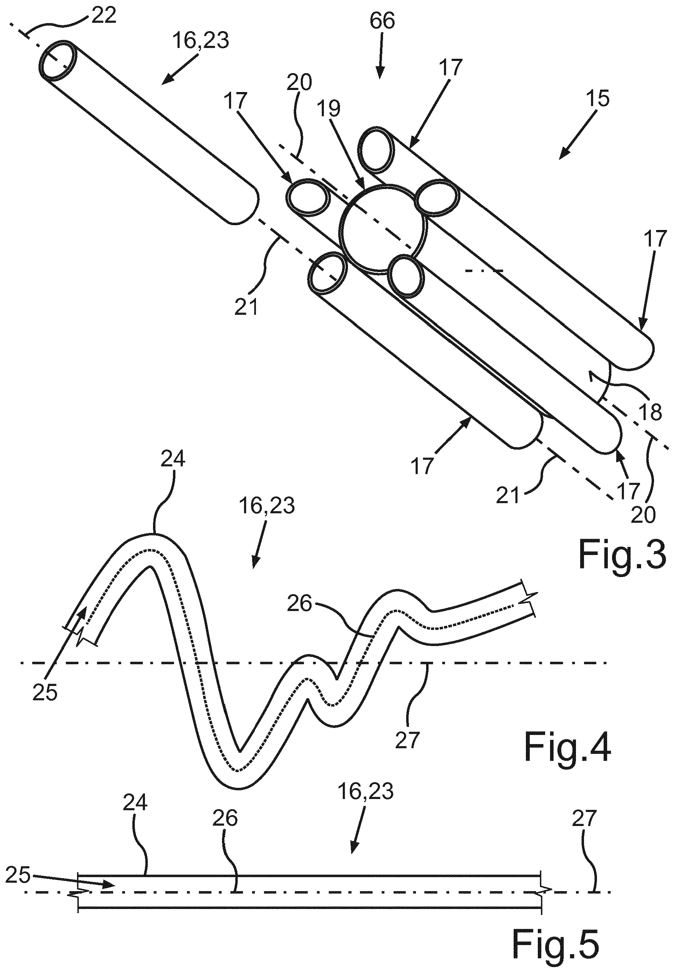

Fig. 3 zeigt in einer schematischen und perspektivischen Ansicht eine Haltevorrichtung 15 und ein Versteifungselement 16. Die Haltevorrichtung 15 weist im vorliegenden Fall fünf Versteifungselementaufnahmen 17 auf, welche entlang einer Außenumfangsfläche 18 eines Führungsmantelelements 19 angeordnet sind. Hierbei verlaufen eine Längsmittenachse 20 des Führungsmantelelements 19 und eine jeweilige Längsmittenachse 21 der jeweiligen Versteifungselementaufnahme 17 zueinander parallel. Des Weiteren sind die fünf Versteifungselementaufnahmen 17 entlang der Außenumfangsfläche 18 zumindest im Wesentlichen gleichmäßig über die Außenumfangsfläche 18 verteilt.

Im vorliegenden Beispiel sind das Führungsmantelelement 19 und die Versteifungselementaufnahmen 17 miteinander einstückig ausgebildet, sodass die Versteifungselementaufnahmen 17 und das Führungsmantelelement 19 zueinander unbewegbar angeordnet bzw. aneinander gehalten sind. Besonders bevorzugt sind die Versteifungselementaufnahmen 17 und das Führungsmantelelement 19 aus einem gemeinsamen Textilgebilde hergestellt. Anders ausgedrückt sind das Führungsmantelelement 19 und die Versteifungselementaufnahmen 17 miteinander einstückig ausgebildet.

Eine Innenumfangsfläche des Führungsmantelelements 19 bildet einen Aufnahmeraum aus, sodass sich das Leitungspaket 13 durch diesen entlang der Längsmittenachse 20 hindurcherstrecken kann. Mit anderen Worten umschließt das Führungsmantelelement 19 das Leitungspaket 13, sodass einzelne Leitungen des Leitungspakets 13 besonders raumeffizient aneinander gehalten sind. Das Führungsmantelelement 19 schmiegt sich besonders effizient an das Leitungspaket 13 an, da das Führungsmantelelement 19 aus dem Textilgebilde hergestellt ist, wodurch das Führungsmantelelement 19 besonders biegeschlaff ausgebildet ist.

In Fig. 3 ist zwar lediglich ein Versteifungselement 16 dargestellt, doch es ist zu verstehen, dass im vorliegenden Beispiel fünf Versteifungselemente 16 zum Einsatz kommen. Genauso gut ist es denkbar, dass eine Anzahl der zum Einsatz kommenden Versteifungselemente 16 durch eine von fünf unterschiedliche, ganze natürliche Zahl definiert ist. Beispielsweise können bei der Zuführvorrichtung 1 bzw. Versteifungseinrichtung 14 ein Versteifungselement 16 oder drei, vier, sechs, sieben, acht usw. Versteifungselemente 16 eingesetzt sein.

Das jeweilige Versteifungselement 16 ist in einen jeweiligen, durch eine Innenumfangsfläche der jeweiligen Versteifungselementaufnahmen 17 begrenzten Aufnahmeraum einschiebbar bzw. eingeschoben. Hierbei grenzen die Innenumfangsfläche der jeweiligen Versteifungselementaufnahme 17 und eine jeweilige Außenumfangsfläche des Versteifungselements 16 idealerweise direkt aneinander an. Hierdurch ist das jeweilige Versteifungselement 16 in einer jeweiligen Versteifungselementaufnahme 17 ortsfest gehalten, sodass eine Längsmittenachse 22 des Versteifungselements 16 mit der Längsmittenachse 21 der entsprechenden Versteifungselementaufnahme 17 zusammenfällt. Dementsprechend ist die Längsmittenachse 22 des Versteifungselements 16 parallel zu der Längsmittenachse 20 des Führungsmantelelements 19 angeordnet, sobald das entsprechende Versteifungselement 16 in der jeweils zugehörigen Versteifungselementaufnahme 17 angeordnet ist. Das Versteifungselement 16 ist vorliegend als ein Schlauchelement 23 ausgebildet, welches ganz oder teilweise aus einem synthetischen Polymer, das heißt Silikon, hergestellt ist.

Fig. 4 zeigt in einer schematischen Ansicht das Versteifungselement 16 bzw. das Schlauchelement 23. Eine Schlauchwand 24 des Schlauchelements 23 bildet ein Kanalelement 25 aus, welches von einem Fluid durchströmbar ist und/oder mit einem Fluid befüllbar ist. Fig. 4 zeigt das Schlauchelement 23 bzw. das Versteifungselement 16 in einem Deaktivierungszustand der Versteifungseinrichtung 14, in welchem das Versteifungselement 16 bzw. das Schlauchelement 23 in einer ersten, den Deaktivierungszustand der Versteifungseinrichtung 14 charakterisierenden Form angeordnet ist. Beispielsweise kann das Versteifungselement 16 biegeschlaff bzw. besonders biegbar sein, sodass das in der jeweiligen Versteifungselementaufnahme 17 angeordnete Versteifungselement 16 einer Form bzw. einen Verlauf des Leitungspakets 13 folgt, da das Versteifungselement 16 über die Versteifungselementaufnahme 17 und das damit festverbundene bzw. einstückig damit ausgebildete Führungsmantelelement 19 fest mit dem Leitungspaket 13 verbunden ist. Zu Illustrationszwecken ist in Fig. 4 eine derartige Form besonders deutlich dargestellt. Es ist besonders gut zu erkennen, dass eine Längsmittenfaser 26 ("neutrale Faser") des Versteifungselements 16 bzw. des Schlauchelements 23 und eine imaginäre Längsmittengerade 27 besonders stark auseinanderfallen bzw. besonders stark voneinander abweichen.

Dahingegen zeigt Fig. 5 in einer schematischen Ansicht das Versteifungselement 16 in einem Aktivierungszustand der Versteifungseinrichtung 14, in welchem das Versteifungselement 16 mit einer Versteifungsenergie beaufschlagt ist, wodurch das im Deaktivierungszustand biegeschlaffe bzw. biegbare Führungsmantelelement 19 versteift ist. Dementsprechend hat die Längsmittenfaser 26 des Versteifungselements 16 bzw. des Schlauchelements 23 im Aktivierungszustand einen Verlauf und/oder eine Form eingenommen, um in Position und Richtung zumindest im Wesentlichen der gedachten Längsmittengerade 27 zu entsprechen. Idealerweise fallen im Aktivierungszustand der Versteifungseinrichtung 14 die Längsmittenfaser 26 und die Längsmittengerade 27 zusammen. Mit anderen Worten führt das Beaufschlagen des Versteifungselements 16 mit der Versteifungsenergie dazu, dass das Versteifungselement 16 in eine gestreckte Position verstellt wird oder ist.

Besonders bevorzugt ist es, wenn sich die Versteifungsenergie über eine in dem Kanalelement 25 angeordnete Druckluft auf das Versteifungselement 16 auswirkt, sodass das Versteifungselement 16 aufgrund der Druckluft in eine den Aktivierungszustand der Versteifungseinrichtung 14 charakterisierende Position, zum Beispiel die in Fig. 5 gezeigten Position, verstellt ist oder wird. Die Druckluft kann mit einem Druck beispielsweise von 0 bis 6 bar beaufschlagt sein. Dies ist besonders vorteilhaft, da dieser Druckbereich ohnehin üblicherweise in modernen Produktions- und/oder Fertigungsanlagen besonders einfach verfügbar ist.

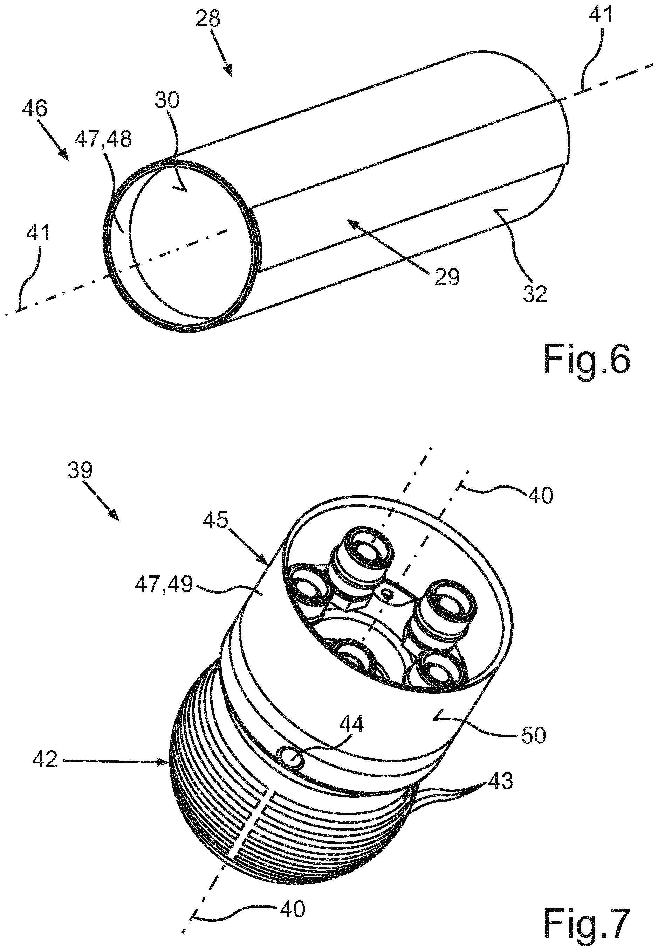

Fig. 6 zeigt in einer schematischen und perspektivischen Ansicht ein Schutzmantelelement 28, welches über eine Verschlusseinheit 29 reversibel und zerstörungsfrei sowie werkzeuglos bzw. werkzeugfrei entlang einer Längserstreckung Richtung des Schutzmantelelements 28 öffenbar und/oder schließbar ist. Beispielsweise kann die Verschlusseinheit 29 wenigstens einen Klettverschluss aufweisen. Im vorliegenden Beispiel ist die Verschlusseinheit 29 als ein Klettverschluss ausgebildet.

Eine Innenumfangsfläche 30 des Schutzmantelelements 28 begrenzt einen Schutzraum 31, in welchem im vorliegenden Beispiel das Leitungspaket 13, die Haltevorrichtung 15, das Führungsmantelelement 19 und die Versteifungselemente 16 gemeinsam angeordnet sind. Mit anderen Worten umschließt das Schutzmantelelement 28 in einer Schutzstellung, das heißt wenn das Schutzmantelelement 28 mittels der geschlossenen Verschlusseinheit 29 in die Schutzstellung verstellt ist, das Leitungspaket 13, die Haltevorrichtung 15, das Führungsmantelelement 19 und die Versteifungselemente 16. Dementsprechend bildet eine Außenumfangsfläche 32 des Schutzmantelelements 28 zumindest größtenteils eine Außenumfangsfläche der Versteifungseinrichtung 14 bzw. der Zuführvorrichtung 1.

In einer Zusammenschau von Fig. 1, Fig. 2 und Fig. 6 ist erkennbar, dass die Außenumfangsfläche 32 des Schutzmantelelements 28 in direktem Kontakt mit einzelnen Führungselementen 33 einer Führungseinrichtung 34 steht. Ein jeweiliges Führungselement 33 umschließt das Schutzmantelelement 28 in einem jeweiligen Führungsbereich, sodass über die Führungselemente 33 bzw. über die Führungseinrichtung 34 das Leitungspaket 13, die Haltevorrichtung 15, das Führungsmantelelement 19, die Versteifungselemente 16 und das Schutzmantelelement 28 zumindest im Wesentlichen gegen ein Bewegen entlang eines Radius der entsprechenden Führungselement 33 blockiert sind. Mit anderen Worten ermöglichen die Führungselemente 33 bzw. ermöglicht die Führungseinrichtung 34 lediglich ein Bewegen dieser Komponenten entlang der Längsmittenachse 20 des Führungsmantelelements 19.

Die Zuführvorrichtung 1 weist einen Längenausgleichsbereich 35 auf, welches es dem Leitungspaket 13 gestattet, besonders nah am Manipulatorarm 2 angeordnet, einer Bewegung des Manipulatorarms 2 zu folgen. Bei einem Herausziehen eines Anteils des Leitungspakets 13 aus dem Längenausgleichsbereich 35 verlängert sich die in dem Längenausgleichsbereich 35 angeordnete Länge des Leitungspakets 13 und der damit fest verbundenen Elemente der Zuführvorrichtung 1. Hierzu ist die Zuführvorrichtung 1 an einem endeffektornahen Ende 36 über eine Anschlusseinheit 37 mit dem Manipulatorarm 2 oder mit dem Endeffektor 12 verbunden.

Bei einem Hineinschieben eines Abschnitts des Leitungspakets 13 in den Längenausgleichsbereich 35 verlängert sich die in dem Längenausgleichsbereich 35 aufgehobene Länge des Leitungspakets bzw. der positionsfest damit verbundenen Elemente der Zuführvorrichtung 1. Hierzu wird die Versteifungseinrichtung 14 in den Aktivierungszustand versetzt, wodurch das Versteifungselement 16 mit der Versteifungsenergie, insbesondere Druckluft, beaufschlagt wird, sodass das Versteifungselement 16 zumindest im Wesentlichen die in Fig. 5 abgebildete Form einnimmt oder einzunehmen versucht und in dieser gehalten wird. Da das Versteifungselement 16 über die Versteifungselementaufnahme 17 und über das Führungsmantelelement 19 mit dem Leitungspaket 13 ortsfest verbunden ist, wird aufgrund der Versteifungsenergie dem Leitungspaket 13 eine Steifigkeit verliehen, sodass bei einem Schieben am endeffektornahen Ende 36 der Zuführvorrichtung 1 das Leitungspaket und die damit ortsfest verbundenen Elemente der Zuführvorrichtung 1 durch die Führungseinrichtung 34 bzw. durch die Führungselemente 33 hindurchgeschoben werden. Hierbei gleitet die Außenumfangsfläche 32 des Schutzmantelelements 28 an einer Innenumfangsfläche der entsprechenden Führungselemente 33 ab.

Um den Längenausgleichsbereich 35 besonders kompakt an dem Manipulatorarm 2 zu halten, weist die Zuführvorrichtung 1 an einem endeffektorfernen Ende 38 eine weitere Anschlusseinheit 39 auf, welche mit Hinblick auf eine besonders vorteilhafte Gleichteilestrategie baugleich mit der Anschlusseinheit 37 ausgebildet sein kann. Dementsprechend erfolgt eine detaillierte Beschreibung der Anschlusseinheiten 37, 39 im Folgenden anhand der Anschlusseinheit 39.

Die Anschlusseinheit 39, welche zumindest weitgehend baugleich mit der Anschlusseinheit 37 ausgebildet sein kann, ist in einem zusammengesetzten Zustand in einer schematischen und perspektivischen Ansicht in Fig. 7 gezeigt. Eine Längsmittenachse 40 der Anschlusseinheit 39 fällt in einem montierten Zustand der Zuführvorrichtung 1 mit einer Längsmittenachse 41 (siehe Fig. 6) des Schutzmantelelements 29 zusammen. Hierbei ist zu verstehen, dass die Längsmittenachse 40, 41 (siehe Fig. 6 bzw. Fig. 7) in einem gestreckten Zustand der Zuführvorrichtung 1 zusammenfallen, während die Längsmittenachse 40, 41 in einem Realbetrieb der Zuführvorrichtung 1 an dem Manipulatorarm 2 bzw. an dem Industrieroboter 3 zumindest bereichsweise auseinanderfallen können. Gleiches gilt für ein Zusammenfallen der Längsmittenachse 20 (siehe Fig. 3) des Führungsmantelelements 19 mit der Längsmittenachse 40 sowie für eine Parallelität der Längsmittenachse 22 (siehe Fig. 3) der jeweiligen Versteifungselemente 16 bzw. der Längsmittenachse 21 der jeweiligen Versteifungselementaufnahmen 17 zu der Längsmittenachse 40 der Anschlusseinheit 39. Die Anschlusseinheit 39 weist ein Gelenkelement 42 auf, welches im vorliegenden Beispiel als ein Kugelelement eines Kugelgelenks ausgebildet ist. Um die Anschlusseinheit 39 besonders masse- und/oder rohstoffeffizient herzustellen, ist in dem Kugelelement eine Vielzahl von Materialausnehmungen 43 vorgesehen. Ferner ist in Fig. 7 ein Anschlusselement 44 gezeigt, über welches das wenigstens eine Versteifungselement 16 bzw. das wenigstens eine Schlauchelement 23 mit der Versteifungsenergie bzw. mit der Druckluft versorgbar ist. Insbesondere handelt es sich bei dem Anschlusselement 44 um ein Gewindeloch, sodass unter Vermittlung einer Gewindeverbindung in dieses eine Zuleitung einer die Versteifungsenergie erzeugenden Versorgungseinrichtung einschraubbar ist.

Die Anschlusseinheit 39 weist ein Befestigungselement 45 auf, an welchem im zusammengebauten Zustand der Zuführvorrichtung 1 jeweiliges Ende 46 (siehe Fig. 6) des Schutzmantelelements 28 angeordnet und fest gehalten ist. Hierzu kann eine reversibel und zerstörungsfrei sowie werkzeuglos lösbare Befestigungseinrichtung 47 vorgesehen sein, welche im vorliegenden Beispiel als ein weiterer Klettverschluss ausgebildet ist. Ein erstes Klettverschlusselement 48, zum Beispiel ein Flauschband, ist an dem Ende 46 des Schutzmantelelements 28 angeordnet, zum Beispiel mit dem Textilgewebe des Schutzmantelelements 28 vernäht. Ein mit dem ersten Klettverschlusselement 48 korrespondierendes, zweites Klettverschlusselement 49, zum Beispiel ein Hakenband, kann an einer Außenumfangsfläche 50 des Befestigungselements 45 angeordnet sein, zum Beispiel kann das zweite Klettverschlusselement 49 mit der Außenumfangsfläche 50 verklebt sein. Es ist aber auch denkbar, dass die Außenumfangsfläche 50 des Befestigungselements 45 das zweite Klettverschlusselement 49 bildet.

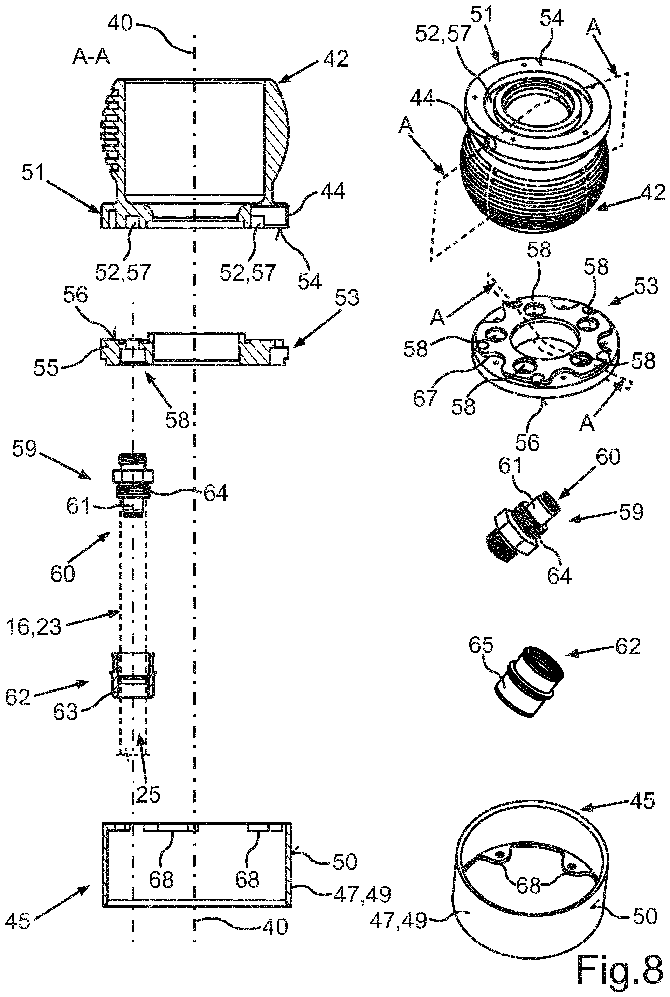

Fig. 8 zeigt einzelne Elemente der Anschlusseinheit 39, welche teilweise in einer perspektivischen Ansicht und in einer Schnittansicht dargestellt sind. Es ist das als Kugelelement ausgebildete Gelenkelement 42 zu erkennen, welches mit einem Basisanteil 51 verbunden ist. Insbesondere können der Basisanteil 51 und das Gelenkelement 42 einstückig miteinander ausgebildet sein. Ferner ist das Anschlusselement 44 zu erkennen, welches von einem Fluid, insbesondere der Druckluft, durchströmbar ist und in ein Verteilerelement 52 eines Verteilermoduls 53 mündet. Das Verteilerelement 52 ist im vorliegenden Beispiel als eine Ringnut ausgebildet, welche in einer Oberfläche 54 des Basisanteils 51 eingeformt ist.

Das Verteilermodul 53 weist eine Dichtplatte 55 auf, deren Dichtungsoberfläche 56 im zusammengebauten Zustand der Anschlusseinheit 39 in direktem Kontakt mit der Oberfläche 54 des Basisanteils 51 bzw. des Gelenkelements 42 steht, sodass das Verteilerelement bzw. die Ringnut 52 zusammen mit der Dichtungsoberfläche 56 ein Verteilerkanalelement 57 begrenzen. Für eine besonders gute fluidische Abdichtung zwischen dem Basisanteil 51 und der Dichtplatte 55 kann zwischen dem Basisanteil 51 und der Dichtplatte 55 wenigstens ein insbesondere torusförmiges Dichtungselement vorgesehen sein.

Die Dichtplatte 55 und der Basisanteil 51 können miteinander verschraubt sein. Alternativ oder zusätzlich können die Dichtplatte 55 und der Basisanteil 51 bzw. das Gelenkelement 42, beispielsweise mittels eines generativen Fertigungsverfahrens, einstückig miteinander ausgebildet sein. Ferner können die Dichtplatte 55 und der Basisanteil 51 kraft-, form- und/oder stoffschlüssig miteinander verbunden sein. Besonders bevorzugt ist es, wenn zum Verbinden der Dichtplatte 55 und des Basisanteils 51 aneinander ein thermisches Fügeverfahren, zum Beispiel ein Schweißen, genutzt wird.

Die Dichtplatte 55 weist des Weiteren wenigstens ein Aufnahmeelement 58 auf, welches ein Innengewinde aufweist und die Dichtplatte 55 vollständig durchdringt. Unter Vermittlung einer Gewindeverbindung ist in das Aufnahmeelement 58 ein Kopplungselement 59 anordenbar, insbesondere einschraubbar, wodurch das Kopplungselement 59 fest in bzw. an der Dichtplatte 55 gehalten ist. Im vorliegenden Beispiel weist die Dichtplatte 55 fünf Aufnahmeelemente 58 sowie fünf Kopplungselemente 59 auf. Ein jeweiliges Kopplungselement 59 ist von einem Fluid, insbesondere der Druckluft durchströmbar, sodass ein versteifungselementseitiges Ende 60 des jeweiligen Kopplungselements 59 über das jeweilige Aufnahmeelement 58 fluidisch mit dem Verteilerkanalelement 57 verbunden ist. Mit anderen Worten ist das Anschlusselement 44 fluidisch mit dem versteifungselementseitigen Ende 60 der jeweiligen Kopplungselemente 59 verbunden.

Über ein jeweiliges versteifungselementseitiges Ende 60 des jeweiligen Kopplungselements 59 ist das jeweilige Versteifungselement 16 bzw. das jeweilige Schlauchelement 23 fluidisch mit dem Anschlusselement 44 verbunden, da das jeweilige Kopplungselement 59 zumindest indirekt fluidisch mit dem einen Anschlusselement 44 verbunden ist. Beispielsweise kann das Schlauchelement 23 fluidisch dicht auf einen Kopplungsabschnitt 61 des Kopplungselements 59 aufgesteckt sein, sodass sich der Kopplungsabschnitt 61 in das Kanalelement 25 hinein erstreckt.

Um einen besonders festen Sitz und/oder um eine besonders hohe Dichtwirkung zwischen den Kopplungsabschnitt 61 und dem Versteifungselement 16 bzw. dem Schlauchelement 23 zu realisieren, ist ein Halteelement 62 vorgesehen, welches ein Innengewinde aufweist, dass unter einem Verspannen bzw. Einklemmen der Schlauchwand 24 des Schlauchelements 23 zwischen einem Haltebereich 63 des Halteelements 62 und dem Kopplungsabschnitt 61 mit einem Haltegewinde 64 des Kopplungselements 59 verschraubbar ist. Beispielsweise kann der Haltebereich 63 in einem Inneren des Halteelements 62 konisch verjüngt sein, sodass eine Klemmwirkung für das Schlauchelement 23 immer stärker wird, je weiter das Halteelement 62 auf das Haltegewinde 64 aufgeschraubt ist. Das Halteelement 62 hat des Weiteren eine Doppelfunktionalität inne, da es einen weiteren Haltebereich 65 aufweist, welcher dazu ausgebildet ist, ein anschlusseinheitseitiges Ende 66 (siehe Fig. 3) einer der Versteifungselementaufnahmen 17 zu halten, welche mittels eines nicht näher beschriebenen Clips bzw. mittels einer nicht näher beschriebenen Halteklammer an bzw. in dem weiteren Haltebereich 65 gehalten ist. Im vorliegenden Beispiel kann das Halteelement 62 in Form und Funktion einer Überwurfmutter ähneln.

Das Befestigungselement 45 kann mit der Dichtplatte 55 verschraubt sein, wobei die Dichtplatte 55 eine Drehsperrkulisse 67 aufweist, in welche das Befestigungselement 45 über mit der Drehsperrkulisse 67 korrespondierende Kulissenelemente 68 eingreift. Hierdurch ist besonders wirksam sichergestellt, dass eine von außen über das Schutzmantelelement 28 und über die Befestigungseinrichtung 47 auf das Befestigungselement 45 wirkende Torsionskraft nicht dazu führt, dass das Befestigungselement 45 und die Dichtplatte 55 relativ zueinander verdreht werden.

Im Unterschied zur endeffektorfernen Anschlusseinheit 39 dichtet die endeffektornahe Anschlusseinheit 37 die fünf fluidisch damit verbundenen Versteifungselemente 16 ab, sodass die Versteifungsenergie, insbesondere die Druckluft, am endeffektornahen Ende 36 nicht aus der Versteifungseinrichtung 14 bzw. aus der Zuführvorrichtung 1 entweichen kann. Sind die Anschlusseinheiten 37, 39 als Gleichteil, das heißt baugleich, ausgebildet, würde die endeffektornahe Anschlusseinheit 37 das Anschlusselement 44 umfassen, über welches die Druckluft in eine Umgebung der Zuführvorrichtung 1 entweichen könnte. Dementsprechend ist ein nicht dargestelltes Verschlusselement vorgesehen, mittels welchem das endeffektornahe Anschlusselement 44 bzw. das endeffektornahe Gewindeloch fluidisch dicht versperrbar bzw. abdichtbar ist/sind. Alternativ kann vorgesehen sein, lediglich bedarfsweise das Gewindeloch in einen jeweiligen Basisanteil 51 einzuformen, insbesondere wenn feststeht, ob das Gleichteil als endeffektorferne Anschlusseinheit 39 oder als endeffektornahe Anschlusseinheit 37 zum Einsatz kommt. Durch den Entfall des Anschlusselements 44 bzw. durch das fluidisch dichte Verschließen des Anschlusselements 44 der endeffektornahen Anschlusseinheit 37 bilden die über die Kopplungselemente 59 an der Anschlusseinheit 37 gehaltenen Versteifungselemente 16 ein gemeinsames, fluidisch dichtes Ende.

Unter erneuter Bezugnahme auf Fig. 1 und Fig. 2 ist ein Sensorelement 69 dargestellt, welches Teil einer Sensoreinrichtung 70 ist. Mittels der Sensoreinrichtung 70 ist ein Zustand der Versteifungseinrichtung 14 und/oder der Zuführvorrichtung 1 erfassbar. Hierbei kann es sich beispielsweise um eine Temperatur, einen Druck, einen Abnutzungsgrad etc. der Zuführvorrichtung 1 bzw. der Versteifungseinrichtung 14 handeln. Von besonderem Interesse ist das Erfassen des Abnutzungsgrads und/oder das Erfassen eines Defekts bzw. drohenden Defekts des Schutzmantelelements 28 und der Versteifungselemente 16. Mittels der Sensoreinrichtung 70 ist ein Sensorsignal bereitstellbar, welches den über das Sensorelement 69 erfassten Zustand der Versteifungseinrichtung 14 bzw. der Zuführvorrichtung 1 charakterisiert. Dieses das den Zustand charakterisierende Sensorsignal ist eine nicht näher beschriebenen Auswerteeinheit, zum Beispiel einer Anzeigeeinheit, bereitstellbar sodass einem Nutzer bzw. Bediener des Manipulatorarms 2 bzw. Industrieroboters 3 Daten und/oder Parameter der Zuführvorrichtung 1 bzw. der Versteifungseinrichtung 14 bereitgestellt werden können.

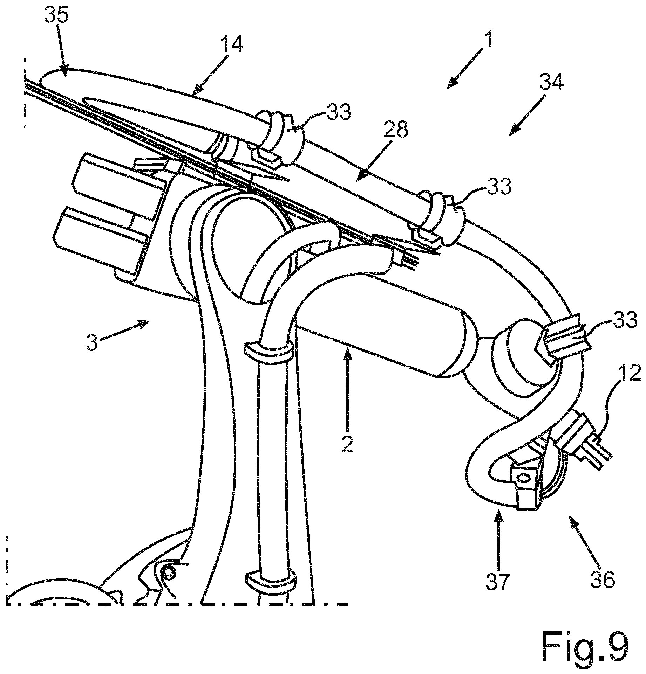

Fig. 9 zeigt in einer perspektivischen Ansicht den mit der Zuführvorrichtung 1 ausgerüsteten Industrieroboter 3 bzw. den mit der Zuführvorrichtung 1 ausgerüsteten Manipulatorarm 2. Besonders gut ist hierbei zu erkennen, wie das Schutzmantelelement 28 mittels der Führungseinrichtung 34 bzw. mittels der Führungselement 33 besonders nah, das heißt im Wesentlichen parallel, zu dem Manipulatorarm 2 gehalten ist. Hierdurch sind die von dem Schutzmantelelement 28 umschlossenen Elemente der Zuführvorrichtung 1 gleichermaßen besonders nah bzw. besonders parallel an dem Manipulatorarm 2 halterbar und mittels der Führungseinrichtung 34 führbar.

Die Versteifungseinrichtung 14 ist derart ausgebildet, dass diese auf bereits vorhandene Robotersysteme bzw. Manipulatorarme und/oder Industrieroboter applizierbar, insbesondere nachrüstbar ist.

## Patentansprüche

1. Zuführvorrichtung (1) für einen zumindest ein Gelenk aufweisenden Manipulatorarm (2), insbesondere eines Industrieroboters (3), mit einem flexiblen Leitungspaket (13), über welches zumindest im Wesentlichen entlang des Manipulatorarms (2) dessen Endeffektor (12) wenigstens ein Prozessmittel zuführbar ist, und einem das Leitungspaket (13) umschließenden, biegeschlaffen Führungsmantelelement (19),
wobei
eine Versteifungseinrichtung (14) mit einer Haltevorrichtung (15) vorgesehen ist, welche positionsfest an dem biegeschlaffen Führungsmantelelement (19) angeordnet ist,
wobei wenigstens ein mittels der Haltevorrichtung (15) gehaltenes Versteifungselement (16, 23) vorgesehen ist, welches in einem Aktivierungszustand der Versteifungseinrichtung (14) mit einer Versteifungsenergie beaufschlagt ist, wodurch das biegeschlaffe Führungsmantelelement (19) und infolgedessen das Leitungspaket (13) mittels des Versteifungselements (16, 23) versteift sind,
und wobei die Haltevorrichtung (15) wenigstens eine parallel zu dem Führungsmantelelement (19) angeordnete Versteifungselementaufnahme (17) aufweist, mittels welcher das wenigstens eine Versteifungselement (16, 23) an der Haltevorrichtung (15) gehalten ist.

2. Zuführvorrichtung (1) nach Anspruch 1,
**dadurch gekennzeichnet, dass**
das wenigstens eine Versteifungselement (16) als ein biegeschlaffes Schlauchelement (23) ausgebildet ist, dessen Schlauchwand (24) ein von einem Fluid durchströmbares Kanalelement (25) begrenzt, welches im Aktivierungszustand vollständig mit dem Fluid befüllt ist, und das Versteifungselement (16, 23) mit der Versteifungsenergie beaufschlagt ist, indem das Fluid in dem Kanalelement (25) mit einem Versteifungsdruck beaufschlagt ist.

3. Zuführvorrichtung (1) nach einem der vorhergehenden Ansprüche,
**dadurch gekennzeichnet, dass**
die Haltevorrichtung (15) und das Führungsmantelelement (19) miteinander einstückig ausgebildet sind.

4. Zuführvorrichtung (1) nach einem der vorhergehenden Ansprüche,
**dadurch gekennzeichnet, dass**
die Haltevorrichtung (15) und das Führungsmantelelement (19) jeweils zumindest teilweise aus einem Textilgebilde hergestellt sind.

5. Zuführvorrichtung (1) nach einem der vorhergehenden Ansprüche,
**dadurch gekennzeichnet, dass**
die Versteifungseinrichtung (14) ein von dem Führungsmantelelement (19) separat ausgebildetes, biegeschlaffes Schutzmantelelement (28) aufweist, welches in einer Schutzstellung das Leitungspaket (13), die Haltevorrichtung (15), das Führungsmantelelement (19) und das wenigstens eine Versteifungselement (16, 23) gemeinsam umschließt.

6. Zuführvorrichtung (1) nach einem der vorhergehenden Ansprüche,
**dadurch gekennzeichnet, dass**
ein erstes Ende (38) der Versteifungseinrichtung (14) durch eine Anschlusseinheit (39) gebildet ist, über welche die Versteifungseinrichtung (14) fern dem Endeffektor (12) an dem Manipulatorarm (2) befestigbar ist.

7. Zuführvorrichtung (1) nach Anspruch 6,
**dadurch gekennzeichnet, dass**
ein zweites Ende (36) der Versteifungseinrichtung (14) durch eine zweite Anschlusseinheit (37) gebildet ist, über welche die Versteifungseinrichtung (14) nahe dem Endeffektor (12) an dem Manipulatorarm (2) befestigbar ist.

8. Zuführvorrichtung (1) nach einem der vorhergehenden Ansprüche,
**dadurch gekennzeichnet, dass**
die Versteifungseinrichtung (14) eine Sensoreinrichtung (70) mit wenigstens einem Sensorelement (69) aufweist, über welche einer Auswerteeinheit wenigstens ein einen Zustand der Versteifungseinrichtung (14) charakterisierendes Sensorsignal bereitstellbar ist.

## Claims

1. Feeding apparatus (1) for a manipulator arm (2) having at least one joint, in particular of an industrial robot (3), comprising a flexible conduit package (13) via which at least one process means can be fed at least substantially along the manipulator arm (2) to the end effector (12) thereof, and a flexible guide sheath element (19) enclosing the conduit package (13), wherein
a stiffening device (14) comprising a holding apparatus (15) is provided, which is arranged in a fixed position on the flexible guide sheath element (19), wherein at least one stiffening element (16, 23) is provided which is held by means of the holding apparatus (15) and is subjected to a stiffening energy in an activation state of the stiffening device (14), as a result of which the flexible guide sheath element (19) and consequently the conduit package (13) are stiffened by means of the stiffening element (16, 23),
and wherein the holding apparatus (15) has at least one stiffening element receptacle (17) which is arranged parallel to the guide sheath element (19) and by means of which the at least one stiffening element (16, 23) is held on the holding apparatus (15).

2. Feeding apparatus (1) according to claim 1,
**characterized in that**
the at least one stiffening element (16) is designed as a flexible hose element (23), the hose wall (24) of which delimits a channel element (25) through which a fluid can flow and which is completely filled with the fluid in the activation state, and the stiffening element (16, 23) is subjected to the stiffening energy by the fluid in the channel element (25) being subjected to a stiffening pressure.

3. Feeding apparatus (1) according to any of the preceding claims,
**characterized in that**
the holding apparatus (15) and the guide sheath element (19) are formed integrally with one another.

4. Feeding apparatus (1) according to any of the preceding claims,
**characterized in that**
the holding apparatus (15) and the guide sheath element (19) are each at least partially made of a textile structure.

5. Feeding apparatus (1) according to any of the preceding claims,
**characterized in that**
the stiffening device (14) has a flexible protective sheath element (28) which is formed separately from the guide sheath element (19) and which, in a protective position, jointly encloses the conduit package (13), the holding apparatus (15), the guide sheath element (19) and the at least one stiffening element (16, 23).

6. Feeding apparatus (1) according to any of the preceding claims,
**characterized in that**
a first end (38) of the stiffening device (14) is formed by a connection unit (39) via which the stiffening device (14) can be fastened to the manipulator arm (2) remotely from the end effector (12).

7. Feeding apparatus (1) according to claim 6,
**characterized in that**
a second end (36) of the stiffening device (14) is formed by a second connection unit (37) via which the stiffening device (14) can be fastened to the manipulator arm (2) close to the end effector (12).

8. Feeding apparatus (1) according to any of the preceding claims,
**characterized in that**
the stiffening device (14) has a sensor device (70) comprising at least one sensor element (69) via which at least one sensor signal characterizing a state of the stiffening device (14) can be provided to an evaluation unit.

## Revendications

1. Dispositif d'alimentation (1) pour un bras de manipulateur (2) présentant au moins une articulation, en particulier d'un robot industriel (3), comportant un paquet de conduites (13) flexible par l'intermédiaire duquel au moins un moyen de processus peut être alimenté au moins sensiblement le long du bras de manipulateur (2) jusqu'à son organe effecteur (12), et un élément formant gaine de guidage (19) souple en flexion et entourant le paquet de conduites (13), dans lequel
un appareil de renforcement (14) comportant un dispositif de maintien (15) est prévu, lequel est disposé de manière fixe en position sur l'élément formant gaine de guidage (19) souple en flexion, dans lequel au moins un élément de renforcement (16, 23) maintenu au moyen du dispositif de maintien (15) est prévu, lequel est sollicité par une énergie de renforcement dans un état d'activation de l'appareil de renforcement (14), moyennant quoi l'élément formant gaine de guidage (19) souple en flexion et par conséquent le paquet de conduites (13) sont renforcés au moyen de l'élément de renforcement (16, 23),
et dans lequel le dispositif de maintien (15) présente au moins un logement pour élément de renforcement (17) disposé parallèlement à l'élément formant gaine de guidage (19) et au moyen duquel l'au moins un élément de renforcement (16, 23) est maintenu sur le dispositif de maintien (15).

2. Dispositif d'alimentation (1) selon la revendication 1,
**caractérisé en ce que**
l'au moins un élément de renforcement (16) est réalisé sous la forme d'un élément formant tuyau (23) souple en flexion dont la paroi de tuyau (24) délimite un élément formant canal (25) pouvant être traversé par un fluide, lequel élément formant canal est entièrement rempli de fluide dans l'état d'activation, et l'élément de renforcement (16, 23) est sollicité par l'énergie de renforcement par la sollicitation par une pression de renforcement du fluide dans l'élément formant canal (25).

3. Dispositif d'alimentation (1) selon l'une des revendications précédentes,
**caractérisé en ce que**
le dispositif de maintien (15) et l'élément formant gaine de guidage (19) sont réalisés d'une seule pièce l'un avec l'autre.

4. Dispositif d'alimentation (1) selon l'une des revendications précédentes,
**caractérisé en ce que**
le dispositif de maintien (15) et l'élément formant gaine de guidage (19) sont respectivement fabriqués au moins partiellement à partir d'une structure textile.

5. Dispositif d'alimentation (1) selon l'une des revendications précédentes,
**caractérisé en ce que**
l'appareil de renforcement (14) présente un élément formant gaine de protection (28) souple en flexion, réalisé séparément de l'élément formant gaine de guidage (19), qui, dans une position de protection, entoure conjointement le paquet de conduites (13), le dispositif de maintien (15), l'élément formant gaine de guidage (19) et l'au moins un élément de renforcement (16, 23).

6. Dispositif d'alimentation (1) selon l'une des revendications précédentes,
**caractérisé en ce que**
une première extrémité (38) de l'appareil de renforcement (14) est formée par une unité de raccordement (39) par l'intermédiaire de laquelle l'appareil de renforcement (14) peut être fixé au bras de manipulateur (2) à distance de l'organe effecteur (12).

7. Dispositif d'alimentation (1) selon la revendication 6,
**caractérisé en ce que**
une seconde extrémité (36) de l'appareil de renforcement (14) est formée par une seconde unité de raccordement (37) par l'intermédiaire de laquelle l'appareil de renforcement (14) peut être fixé au bras de manipulateur (2) à proximité de l'organe effecteur (12).

8. Dispositif d'alimentation (1) selon l'une des revendications précédentes,
**caractérisé en ce que**
l'appareil de renforcement (14) présente un appareil de détection (70) comportant au moins un élément de détection (69) par l'intermédiaire duquel au moins un signal de détection caractérisant un état de l'appareil de renforcement (14) peut être mis à disposition d'une unité d'évaluation.
